(19) Europäisches Patentamt

European Patent Office

Office européen des brevets

(11) **EP 1 720 041 A1**

(12) **EUROPEAN PATENT APPLICATION**

(43) Date of publication:
**08.11.2006 Bulletin 2006/45**

(51) Int Cl.:
*G01T 1/17* (2006.01)     *G01T 1/36* (2006.01)

(21) Application number: **05009566.0**

(22) Date of filing: **01.05.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **Target Systemelectronic GmbH
42651 Solingen (DE)**

(72) Inventors:
• **Stein, Jürgen
42349 Wuppertal (DE)**

• **Pausch, Guntram
01099 Dresden (DE)**
• **Gueorguiev, Andrey
Oak Ridge, TN 37830 (US)**

(74) Representative: **Schramm, Michael et al
Bettinger Schneider Schramm,
Patent- und Rechtsanwälte,
Postfach 86 02 67
81629 München (DE)**

(54) **Use of digital filters in a detector and method for obtaining energy spectra of nuclear radiation**

(57)     Measuring device for obtaining energy spectra of one or more types of radiation, namely of a X-ray, gamma ray, or nuclear particle radiation, comprising a detector system; an analog-to-digital convertor (ADC), and a digital filter, wherein the digital filter is inverse to the filter describing at least parts of the transfer network of the detector system. The digital filter can be used for pole zero compensation.

**Figure 3**

EP 1 720 041 A1

## Description

The present invention relates to a device for determining the energy spectra of one or more radiation sources, comprising a detector system for the measurement of x-ray, gamma or nuclear particle radiation, an analog to digital converter and a digital filter.

## Introduction

Digital signal processing has entered all areas of nuclear signal analysis. The present invention proposes the use of deconvolution or inverse filters as base for improved energy resolution, fast timing and high throughput nuclear electronics. It has been found that deconvolution filtering allows processing scintillation detectors with complex decay schemes achieving unparalleled high throughput for detectors with long decay times.

Signals from radiation detectors are subject to transfer functions of the detector physics and the front-end electronics before being measured. These transfer functions alter the initial signal pattern and thereby obscure the measurement of input pulse parameters. Especially energy information and timing are affected. The modelling of the analogue transfer function as an LTI (linear time independent) system, an inverse filter, called deconvolution, reveals the original unchanged input signal.

The present invention proposes such general linear deconvolution filters for scintillation as well as semiconductor spectrometry. The differential equation characterizing the transfer network, detector and electronics, is translated to a difference equation after signal sampling and digitization. It has been found that discrete LTI systems can be inverted so that the inverse difference equation and the inverse filter can be constructed.

Discrete LTI systems are expressed by corresponding IIR - FIR filter pairs. FIR (Finite Impulse Response) and IIR (Infinite Impulse Response) filters are standard elements of digital signal processing mostly studied in the frequency domain. For digital filtering of random pulses however, the invention proposes a time domain construction and specification of filter parameters for the first time.

This allows for the construction of a digital high throughput deconvolving NaI(Tl) detector filter, an optimum double decay-time resolving filter for CdWO detectors as well as a novel and inventive dual pole zero cancellation for high resolution spectrometry systems.

## History

US 5 307 299 introduced the first digital nuclear signal processing system, called PPADC and later ADSP. This patent resolved the problem of the exponential signal deconvolution and digital trapezoidal filtering. The procedure has become known as MWD, moving window deconvolution. The algorithm was implemented on four cascaded floating point DSPs. MWD could also be used for digital multi-pole-zero compensation and ballistic deficit correction.

This invention introduces inverse LTI filtering for the deconvolution of nuclear electronic signals. The filters to be treated are FIR and IIR filters which, although implemented as deconvolution in the time domain, are typically foremost studied in the frequency domain. Because of the nuclear signal characteristics, a direct treatment in the time domain leads to very useful new results. Still it can benefited a lot from those frequency filter construction methods that search to transfer analogue designs into the digital domain. It is referred to filter design methods derived from those used for the digitisation of classic Bessel, Butterworth, Chebychev and elliptic filters, especially matched pole, and equivalent impulse response construction.

There are two important features applying to nuclear signals that allow a straight forward deconvolution approach in the time domain. For one, the signals can be understood as generated by random events of short, finite duration. Secondly, the signals are transferred by an analogue linear network. From linear filter theory it is known that the impulse response is the system function of the network which is to be studied. Thus, not only the original event is measured, but the complete transfer network from a single pulse becomes known also.

It is the object of this invention to provide a measuring device and a method for measuring radiation signals, improving the previously known devices and methods, thus allowing for devices with less and simpler electronic parts.

This is achieved by providing a measuring device for obtaining energy spectra of one or more types of radiation, namely of a X-ray, gamma ray, or nuclear particle radiation, comprising a detector system, an analog-to-digital converter (ADC), and a digital filter, where the digital filter is inverse to the filter describing at least parts of the transfer network of the detector system.

It is also achieved by providing a measuring device for obtaining energy spectra of one or more types of radiation, namely of a X-ray, gamma ray, or nuclear particle radiation, comprising a detector system, an analog-to-digital converter (ADC), and a digital filter, where the digital filter provides for a single pole zero compensation.

It is further achieved by providing a measuring device for obtaining energy spectra of one or more types of radiation, namely of a X-ray, gamma ray, or nuclear particle radiation, comprising a detector system, an analog-to-digital converter (ADC), and a digital filter, where the digital filter provides for a dual pole zero compensation.

In a preferred embodiment, the inverse digital filters are implemented in specialized integrated circuits, e.g. digital signal processors (DSPs), ASICs, or PLDs. It has proved an advantage, if the inverse digital filters are realized within a programmable device of a common data processing unit.

In another embodiment of the invention, the analog-to-digital converter is integrated in the detector unit together with the detector system.

It is an advantage if the digital signals $x_n$ are transferred by means of wired or wireless data transmission lines to the inverse filter for further processing, especially when the wired data transmission line is selected from the group, consisting of USB, parallel or serial interfaces, Ethernet, or fiber-optic system and when the wireless data transmission line is selected from the group, consisting of wireless LAN, ISM frequency range or optical (e.g. infrared) transmission.

In a further embodiment, the analog-to-digital converter is realized on a plug-in board for computers. It is also possible to realize the inverse digital filter as a programmable data processing unit.

Part of this invention is also a method for obtaining energy spectra of one or more types of radiation, namely of a X-ray, gamma ray, or nuclear particle radiation, comprising the steps of acquisition of an analog detector signal, analog-to-digital conversion of the detector signal, digital filtering of the detector signal, while the digital filter is inverse to the filter describing at least parts of the transfer network of the detector system, and output of the filtered detector signal.

Another part of this invention is a method for obtaining energy spectra of one or more types of radiation, namely of a X-ray, gamma ray, or nuclear particle radiation, comprising the steps of acquisition of an analog detector signal, analog-to-digital conversion of the detector signal, determination of a single pole $\alpha$ from $\alpha^r$ by division of two consecutive data points $x_n, x_{n-r}$ at a distance $r$ on the exponential trailing edge of the input signal, where $r \in R\{0\}$, digital filtering of the detector signal, while the digital filter compensates for the single predetermined pole, and output of the filtered detector signal.

Also disclosed is a method for obtaining energy spectra of one or more types of radiation, namely of a X-ray, gamma ray, or nuclear particle radiation, comprising the steps of acquisition of an analog detector signal, analog-to-digital conversion of the detector signal, determination of two poles $\alpha, \beta$ from $\alpha^r, \beta^r$ by choosing four equidistant consecutive data points $x_v, x_{v-r}, x_{v-2r}, x_{v-3r}$ on the exponential trailing edge of the input signal, from

$$\alpha = (1-\gamma)^{r^{-1}}, \beta = \left(\frac{\gamma x_{n-2r} - x_{n-3r}}{\gamma x_{v-r} - x_{v-2r}}\right)^{r^{-1}}, \quad \text{where} \quad a := x_{v-r}x_{v-r} - x_v x_{v-2r}, \quad b := x_v x_{v-3r} - x_{v-r}x_{v-2r}$$

$$c := x_{v-2r}x_{v-2r} - x_{v-r}x_{v-3r}, \quad \gamma := \left(-b + \frac{\sqrt{b^2 - 4ac}}{2a}\right), \text{ and } r \in R\{0\}, \text{ digital filtering of the detector signal,}$$

while the digital filter compensates for the two predetermined poles, and output of the filtered detector signal.

It is also an advantage to provide software for obtaining energy spectra of one or more types of radiation, namely of a X-ray, gamma ray, or nuclear particle radiation, where the software is stored on a data carrier, and, if applied, is capable of digitally filtering of previously obtained detector signals, which have been digitized by means of an analog-to-digital converter, where the digital filter is inverse to the filter describing at least parts of the transfer network of the detector system, and where the filtered detector signal is provided for further evaluation.

Another embodiment of this invention is a software for obtaining energy spectra of one or more types of radiation, namely of a X-ray, gamma ray, or nuclear particle radiation, where the software is stored on a data carrier, and, if applied, is capable of digitally filtering of previously obtained detector signals, which have been digitized by means of an analog-to-digital converter, where a single pole $\alpha$, which is determined from $\alpha^r$ by division of two consecutive data points $x_n, x_{n-r}$ at a distance $r$ on the exponential trailing edge of the input signal, where $r \in R\{0\}$, is set for filtering purposes, and where the filter compensates for the previously set pole and where the filtered detector signal is provided for further evaluation.

Part of this invention is also a software for obtaining energy spectra of one or more types of radiation, namely of a X-ray, gamma ray, or nuclear particle radiation, where the software is stored on a data carrier, and, if applied, is capable of digitally filtering of previously obtained detector signals, which have been digitized by means of an analog-to-digital converter, where two poles $\alpha, \beta$, which are determined from $\alpha^r, \beta^r$ by choosing four equidistant consecutive data points $x_v, x_{v-r}, x_{v-2r}, x_{v-3r}$ $x_n, x_{n-r}$ at a distance $r$ on the exponential trailing edge of the input signal, with

$$\alpha = (1-\gamma)^{r^{-1}}, \beta = \left(\frac{\gamma x_{n-2r} - x_{n-3r}}{\gamma x_{v-r} - x_{v-2r}}\right)^{r^{-1}},$$

where

$$a := x_{v-r}x_{v-r} - x_v x_{v-2r}, \qquad\qquad b := x_v x_{v-3r} - x_{v-r}x_{v-2r},$$

$$c := x_{v-2r}x_{v-2r} - x_{v-r}x_{v-3r}, \qquad \gamma := \left(-b + \frac{\sqrt{b^2 - 4ac}}{2a}\right),$$

and $r \in R\{0\}$, are set for filtering purposes, and where the filter compensates for the previously set poles and where the filtered detector signal is provided for further evaluation.

The principles of this invention are further described, referring to Figures 1 to 12, whereas it is shown in

Figure 1     the exponential decay of a signal, serving as input signal to a MWD filter;
Figure 2     the output signal of the MWD filter after processing the signal of Figure 1;
Figure 3     the filter goal of the invention;
Figure 4a    the physical charge pulse;
Figure 4b    the actual measured output signal;
Figure 4c    the result of filtering the signal of Figure 4b with a filter according to the invention;
Figure 5a    an incident pulse signal;
Figure 5b    the signal of Figure 5a, convolved with the light decay;
Figure 5c    the signal of Figure 5a, convolved with the decay of the preamplifier;
Figure 5d    the signal of Figure 5a, convolved with the preamplifier and the light decay;
Figure 6a    initial 150 ns charge pulse of a NaI detector;
Figure 6b    signal of Figure 6a, convolved with a 250 ns light decay;
Figure 6c    signal of Figure 6b, convolved with the 250 ns anode integrating capacitor;
Figure 6d    signal of Figure 6c, convolved with the 750 ns RC integration of the preamplifier, both simulated and sampled;
Figure 7a    simulated and sampled detector signal;
Figure 7b    the signals of Figure 7a after first deconvolution;
Figure 7c    the signals of Figure 7b after a further deconvolution;
Figure 7d    the signals of Figure 7c after the final deconvolution;
Figure 8a    bipolar shaping of the signals after deconvolution;
Figure 8b    impulse response of the combined FIR filter;
Figure 9a    first light component of a $CdWO_4$ detector light decay signal;
Figure 9b    second light component of a $CdWO_4$ detector light decay signal;
Figure 9c    superposition of the signals shown in Figures 9a and 9b;
Figure 10    physical radiation signal resulting from deconvolution ;
Figure 11    differentiated impulse response with two real poles; and
Figure 12    differentiated impulse response with four real poles.

## Basic Mathematical Tools

In the following it is referred to operators, filters and transfer functions. Any equation which transfers an input signal to an output signal will be called a "transfer function". In most literature a transfer function operates on objects in the frequency, Laplace or z space. The convolution operation with the impulse response will also be called a transfer function.

**Linear Time-Invariant Filtering**

Classical signal processing operations such as signal transmission, stationary noise removal or predictive coding are implemented with linear time-invariant operators. The time invariance of an operator $L$ means that if the input $f(t)$ is delayed by $\tau$, $f_\tau(t) = f(t - \tau)$, then the output is also delayed by $\tau$ :

$$g(t) = Lf(t) \Rightarrow g(t - \tau) = Lf_\tau(t) . \qquad (Eq.1)$$

**Impulse Response**

Linear time-invariant systems (filters, transfer functions) are characterized by their response to a Dirac impulse. If $f$ is continuous, its value at $t$ is obtained by an integration against a Dirac located at $t$ . Let $\delta_u(t) = \delta(t - u)$:

$$f(t) = \int_{-\infty}^{+\infty} f(u)\delta_u(t)du \qquad (Eq.\ 2)$$

The continuity and linearity of $L$ imply that

$$Lf(t) = \int_{-\infty}^{+\infty} f(u)L\vartheta_u(t)du \qquad (Eq.\ 3)$$

Let $h$ be the impulse response of $L$ :

$$h(t) = L\delta(t) .$$

The time-invariance proves that $L\delta_u(t) = h(t - u)$ and hence

$$Lf(t) = \int_{-\infty}^{+\infty} f(u)h(t - u)du = h * f(t) \qquad (Eq.\ 4)$$

A time-invariant filter is thus equivalent to a convolution with the impulse response $h$. The continuity of $f$ is not necessary. This formula remains valid for any signal $f$ for which the convolution integral converges. The properties of convolution products, such as commutativity (C), differentiation (D), Dirac convolution (Dc) will be widely used in the following paragraphs.

$$f * h(t) = h * f(t) \ (C) \qquad (Eq.\ 5)$$

$$\frac{d}{dt}(f * h)(t) = \frac{df}{dt} * h(t) = f * \frac{dh}{dt}(t) \ (D) \qquad (Eq.\ 6),$$

$$f * \delta_\tau(t) = f(t - \tau) \ (\text{Dc}) \qquad (\text{Eq. 7})$$

**Radiation Detector Response Functions as a Linear Filter**

Excited by Gamma quanta, ideal scintillators emit light pulses having a single decay component. A perfect NaI crystal should generate an exponentially shaped light pulse with a $\tau$ = 240$ns$ decay time. The impulse response to a Gamma quantum of such a scintillation detector is indistinguishable (apart from the noise contribution) from an RC high pass filter excited by a Dirac pulse. The basic differential equation for the Photo-Multiplier-Tube (PMT) current output is

$$I_{pmt}(t) = \frac{1}{RC} \dot{I}_{pmt}(t) \quad (\text{Eq. 7})$$

For the detector crystal single component light output an equivalent differential equation is

$$l(t) = \frac{1}{\tau} \dot{l}(t) \quad (\text{Eq. 8})$$

The time domain output signal of the detector-PMT combination is the convolution

$$I_t(t) = \int_{-\infty}^{\infty} I_{pmt}(u) \cdot l(t - u) du$$

which becomes a multiplication in the s-domain after a Laplace transform

$$I_s(s) = \frac{1}{(s - \tau)(s - RC)}$$

A linear filter in mathematical terms is a linear differential equation. As a consequence, any linear system having a linear differential equation can be treated as linear time invariant filter, thereby opening the door for a variety of solutions and methods of many equivalent filter problems. In filter theory, a simple model for a detector-PMT-preamplifier system is an all-pole filter.

In the typical s-transform (Laplace) notation the general all pole transfer function is

$$H(s) = \frac{1}{\prod_{v=1}^{N}(s - \sigma_v)} \qquad (\text{Eq. 8})$$

The detector pulse output then is modelled as the impulse response of an all-pole filter. As a filter is completely characterized by its impulse response to a Dirac, a single detector pulse reveals already all information of the transfer network.

For most detector applications, the ultimate goal is to measure the properties of the "original" initial impulse. Theoretically, this can be achieved by applying a filter inverse to the filter which characterizes the detector system. Applying an inverse linear filter is also called deconvolution.

From a filter theoretical standpoint, a linear deconvolution is a multiple pole-zero cancellation process, in which all poles of the analogue electronics and the detector are practically cancelled by corresponding zeroes of the inverse filter.

$$H^*(s) = \prod_{v=1}^{N}(s - \lambda_v) \qquad (\text{Eq. 9})$$

Setting $\sigma_v = \lambda_v$ it follows that $H(s) \cdot H^*(s) \equiv 1$.

The continuous inverse filter of Equation 9 cannot be practically realized utilizing discrete analogue electronics. It is one object of this invention to provide a respective digital inverse filter. This is in principle achieved by conducting the following steps:

- uniquely characterizing the detector system by a linear differential equation $L(t)$;

- interpreting the differential equation as an analogue linear filter $H(s)$;

- translating the analogue filter into an equivalent digital filter H($z$);

- inverting the digital filter H$^{-1}$($z$); and

- applying the inverse filter to the sampled detector signal, revealing the input pulse $h(t_n)$.

In more symbolic terms:

$$L(t) \rightarrow H(s) \rightarrow \mathrm{H}(z) \rightarrow \mathrm{H}^{-1}(z) \rightarrow h(t_n)$$

It is also an object of this invention to provide digital filters that are inverse to real nuclear detector system transfer functions. It has been found that it is possible to model a nuclear detector system (consisting of a detector-preamplifier combination) with sufficient accuracy as an analogue LTI process which can be transferred in the digital domain in a discrete LTI filter, so that the inverse filter does actually reveal the original physical input signal, i.e. the energy deposition (or charge generation) in the active detector volume.

### The general LTI Difference Equation and its Inverse

Digital linear filters are naturally implemented by difference equations on digital hardware whereas analogue filters are realized on analogue computers through differential equations. By analogue computers we mean circuits built by operational amplifiers and passive components. It is obvious that a digital filter somehow approximates the corresponding continuous form. In some cases, the analogue filter features can be even reproduced "exactly" by a digital filter, e.g. identical filter poles can be constructed. This fact is especially important when trying to deconvolve an analog transfer function.

The general difference equation for a recursive discrete LTI $\Lambda(x_n)$ filter defines the sequence $y_n$ as mapping of the sequence $x_n$ :

$$\Lambda(x_n) : x_n \mapsto y_n$$

$$y_n = \sum_{v=0}^{N} c_v x_{n-v} + \sum_{v=1}^{M} d_v y_{n-v} \qquad (\text{Eq. 10a})$$

Equation 10a states how to calculate the filter output $y_n$ from the input $x_n$. It defines a subclass of all LTI filters. However, unless mentioned otherwise, the term DLTI filter shall mean a system satisfying Equation (10a). This equation is known from digital filter theory.

The question of invertibility of the DLTI filters, the basis of this invention, has however not been treated in digital filtering literature but rather appears in control theory. As the mapping of $x_n$ on $y_n$ is bijective, the inverse of the recursive LTI equation is given by rearranging the terms resolving Equation 10a for $x_n$. Substituting

$$d'_k = \frac{-d_k}{c_0}, \; c'_k = \frac{-c_k}{c_0}$$

and $d'_0 = 1$ gives

$$x_n = \sum_{v=0}^{M} d'_v y_{n-v} + \sum_{v=1}^{N} c'_v x_{n-v} \qquad \text{(Eq. 10b)}$$

The symmetry clearly shows that Equation 10b can again be interpreted as a DLTI filter. Recursive and non-recursive parts symmetrically exchange variables for the inverse equation. This inversion has far reaching implications: the DLTI system described in Equation 10a is invertible. All signals processed by systems that are characterized by Equation 10a can be fully recovered, deconvolved by a recursive algorithm.

In the z-domain, the inverse LTI filter is the reciprocal of the rational transfer function H(z) :

$$H(z) = \frac{\sum_{v=0}^{N} c_v z^{-v}}{1 - \sum_{v=1}^{M} d_v z^{-v}} \qquad \text{(Eq. 10c)}$$

$$H^{-1}(z) = \frac{\sum_{v=0}^{N} d'_v z^{-v}}{1 - \sum_{v=1}^{M} c'_v z^{-v}} \qquad \text{(Eq. 10d)}$$

The z-transform is defined as an infinite power series. For the analysis in the z-domain, the region of convergence (ROC) is of importance. For finite length sequences, the ROC includes all values of z (except for 0 and infinity). Therefore it can safely be assumed that our rational system function $H(z)$ as well as its inverse exist and are stable in the context of this invention. The necessary and sufficient conditions for the existence of $H^{-1}(z)$ are that $H(z)$ is minimum phase, i.e. all poles and zeroes are inside the unit circle $|z| < 1$. The inversion of the DLTI difference equation in the time domain seems to prove that even unstable systems can be inverted, and therefore that the inverse of a stable system does not necessarily have a stable inverse. This apparent contradiction to the necessary and sufficient minimum phase condition, is resolved as a finite length input sequence is required, i.e. WLOG $x_n = 0$ for *all* $n < n_0$, wheres the sequence is stopped at an arbitrary index. The ROC for z of the system z-transform then includes again all values for z.

With finite time constrains, DLTI filters always achieve bounded outputs from bounded inputs. By applying the z-transform certain restrictions are put on the LTI difference equation that is to be transformed, i.e. the validity is extended to infinite t. For the purpose of this invention however, it is always assumed that only finite time intervals are dealt with and therefore it can be assumed that the system is always BIBO (bounded input bounded output) stable.

The reason for elaborating on the subject is the fact, that it is intended to include the inversion of unstable systems with poles and zeroes on $|z|=1$, numerical differentiation and integration operations.

In real hardware applications DLTI filter inversion results are affected by limited arithmetic precision. Finite sampling intervals and noise deteriorate the digital inversion of an analogue filter.

The problem is that of the noisy channel in communication theory. LTI filters are by definition coordinate transforms, signal characteristic compressors or expanders. In the digital domain however, if infinite arithmetic accuracy is assumed, DLTI filters do not change the information content of the signal. By applying the inverse filter with non-zero initial conditions, the exact information is revealed. The entropy gain of general LTI filters has been calculated by Shannon in his 1948 paper "A Mathematical Theory of Communication". Other than Shannon, who was looking at the problem for (frequency) band limiting filters, this invention is mostly dealing with sampled random signals pulses without frequency restrictions (other than the Nyquist frequency).

**Applying the Inverse Filter to a noisy Signal**

Wiener studied in 1949 already what happens when applying an inverse filter to a noise distorted signal (Nobert Wiener, "Extrapolation, Interpolation and Smoothing of Stationary Time Series"). The astonishing result from filter theory is the independence of the optimal noise filter from the inverse transfer function.

Nevertheless, this becomes clear when, as proposed in this invention, DLTI filters are assumed. They are commutative. Therefore the treatment of noise filtering may be detached and optimal noise filters may be developed separately from a deconvolution.

**Definition of Nuclear Signals**

Casually speaking, a nuclear signal possesses an arbitrary steep rise and a nearly exponentially decaying drop off. In this context, a nuclear signal is defined as the response of a linear time invariant analogue filter to a finite charge pulse.

**Pre-Filter Filter for Digitized Nuclear Signals**

In the following, it is explained why digital signal processing works so extraordinary well on nuclear signals. An often heard argument is the necessity of very high sampling speed matching the fast rise time of a detector preamplifier output in order to satisfy the sampling theorem.

However, for all applications where only the signal energy needs to be quantified, the rise time trajectory does not need to be digitized. The signal between two samples must be reliably integrated so that the complete charge information is picked at each sample point. Interestingly, the theoretically ideal pre-filter for charge quantization is not an ultra steep low pass filtering any frequency above Nyquist. It is rather a perfect moving average filter with an integration time exactly matching the sampling rate. At first glance, this assertion seems to violate the sampling theorem.

However, it has to be found out which overall filter characteristic has to be achieved for the whole system, which parameters or signal properties must be transferred invariantly and which can be ignored.

This can be understood when looking at classical analogue signal processing. The impulse response of shaping amplifiers is ideally "trapezoidal", "Gaussian", "Cusp". The one time digitization of the spectrometry ADC picks up the charge at the maximum of the shaped impulse, preferably independent of the preamplifier signal rise time. A steep frequency filter as shaping amplifier on the other hand, would only work well with ideally steep input signals and yield a meagre filtering result: It would provide a substantial undershoot, a ringing signal response and would be sensitive to the signal rise time rather than the signal charge.

The digitisation pre-filter filter in nuclear signal processing is intended to preserve the charge information and to set forth the digital filter implementation. Under the assumption that the trapezoidal filter is optimal for radiation detectors, a moving average pre-filter would be the perfect pre-filter.

**Oversampling of Digitized Nuclear Signals**

Another setup which also explains the anti-aliasing requirements, has also a very practical impact. Let a nuclear signal be digitized at a high sampling speed. Furthermore, let an ideal digital shaping filter recover the charge optimally from the samples.

The same charge value must be computed from samples at lower sampling speeds as well. Lower sampling speed is equivalent to the decimation of high speed sampling, picking only every other sample. It still can be made sure that the full charge information is also contained in these samples of the decimated case. The requirement is a moving average filter of the decimation width with equal weights. It provides for a signal, the charge integral of which can be derived correctly. This moving average filter applied before the decimation guaranties charge preservation.

The analogue case where the moving average becomes a gated integrator filter is when the sampling speed is increased to infinity.

The pre-filter for (first order-) sampling of nuclear signals therefore is not an anti-aliasing filter in the strict sense. It is not frequency aliasing which has to be avoided. Charge loss must be prevented thus the required pre-filter could be referred to as a "ballistic deficit correction integrator".

**Definition of FIR and IIR Filters**

The DLTI equation $y_n = \sum_{v=0}^{N} c_v x_{n-v} + \sum_{v=1}^{M} d_v y_{n-v}$ splits into a recursive part $y_n = \sum_{v=1}^{M} d_v y_{n-v}$ "IIR" and

a non-recursive part $y_n = \sum_{v=0}^{N} c_v x_{n-v}$ "FIR". Any DLTI filter can be expressed as a combination of IIR and FIR filters. For the purpose of this invention it is sufficient to restrict the discussion on recursively defined IIR filters.

**Moving Window Deconvolution as FIR Filter**

The purpose of moving window deconvolution (MWD) is to deconvolve exponentially decaying pulses of nuclear detector signals. MWD is a linear digital filter defined in a difference equation. More specifically MWD is a special form of a FIR filter with specific coefficient structure. FIR filters are linear time-invariant systems. As such, the above mentioned properties are very useful for the construction and implementation of convolution filters.
The classic form of the MWD filter, the precursor of the trapezoidal shaper defined by the equation

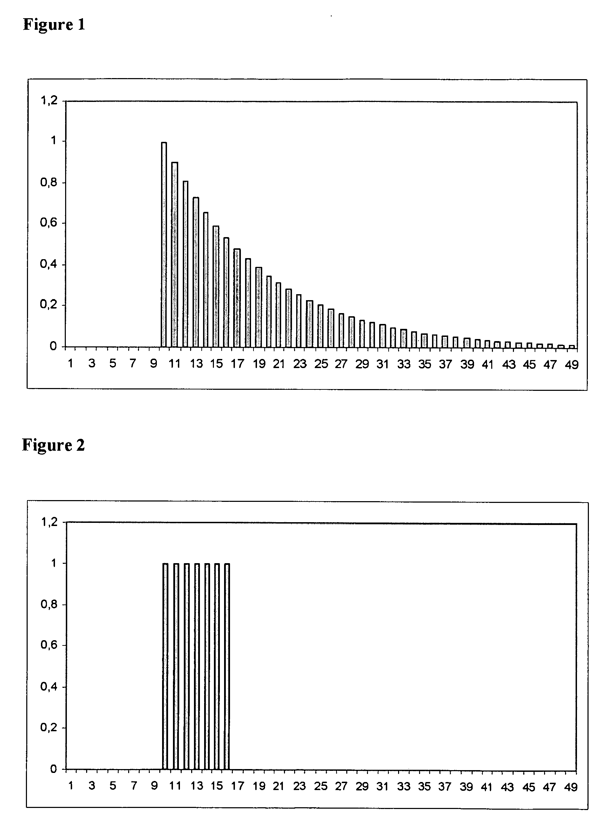

$y_n = x_n - x_{n-s} + k \sum_{v=n-s}^{n-1} x_v$ is "flattening" the exponential decay and yielding a finite rectangular window response the width of s samples (**Figures 1 and 2**). By deconvolving the decay, the delta pulse input to the exponential filter, shown in Figure 1, is revealed as time extended pulse, as can be seen from Figure 2, showing the MWD output signal.

This form of the MVD equation is transferred to a FIR filter notation: $y_n = \sum_{v=0}^{s} h_v \cdot x_{n-v}$ with coefficients $h_v$

$= \{1, k, k, k, \ldots, k, k, k, -1 + k\}$. For $s = 1$, $y_n = x_n - x_{n-1} + k \cdot x_{n-1}$, the rectangle is squeezed to a single pulse, the deconvolution of the input signal. In the following paragraphs, the finding to arbitrary convolutions of exponential signals will be generalized.

**Detector Response Function modelled as Difference Equation**

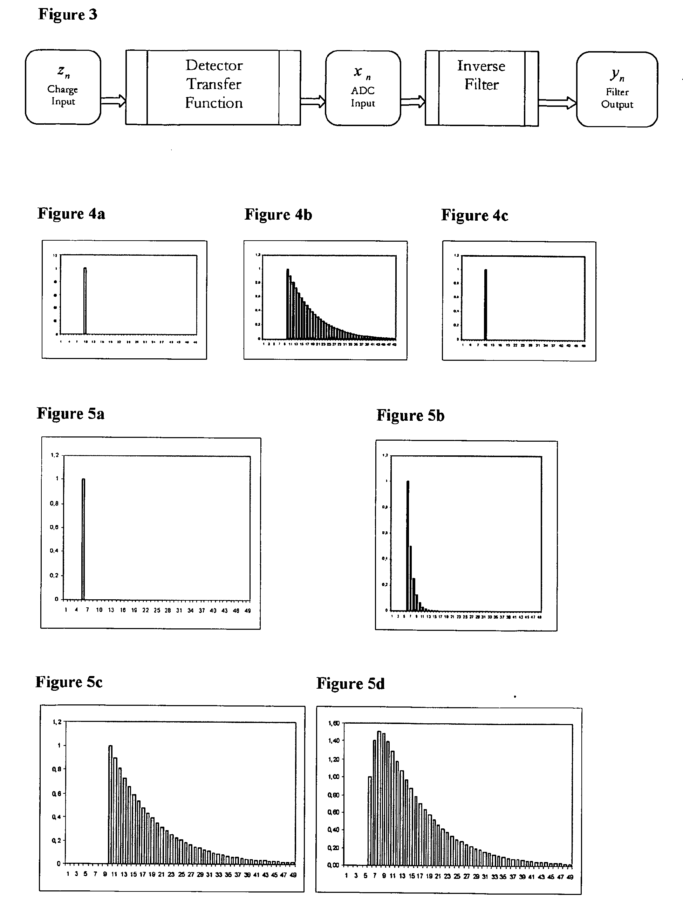

A simple type of a weighted difference, a first order difference operator removes the effect of an integrating exponential filter. A corresponding electrical circuit to the integrating filter is a charge preamplifier with resistive feedback. The weighted difference operation reveals an initial charge pulse and thus reconstructs any arbitrary detector "charge" input signal.
However one may look at it, an exponentially decaying detector pulse can be understood either a result of an RC differentiation filter after a step function or a charge integration process of a charge pulse. The used model for the detector assembly is the charge pulse response of an RC integrator, the charge integrating preamplifier.
It is one object of this invention to analyze an idealized resistive feedback detector system with a fast sampling ADC. $x_n$ denotes the ADC samples of the output of a charge sensitive, resistive feedback preamplifier. The signal is generated by the input charge per time unit $z_n$. Let $y_n$ denote a filter output. The filter goal, schematically shown in **Figure 3,** is $y_n = z_n$.
The original charge pulse $z_n$, produced by the radiation signal to be measured, is shown in **Figure 4a.** The physical properties of the radiation detector system lead to an actual measured output signal $x_n$ of **Figure 4b.** When applying the filter proposed in this invention, the final signal is $y_n$ as shown in **Figure 4c.**
Let $RC = \alpha_t$ be the exponential constant of the integrating preamplifier. All signals have undergone the transfer function of a single RC integration. The pulse response is of the form $e^{-\alpha t}$. Using a uniform sampling interval $\Delta t$, it is defined $\alpha := e^{\alpha t \Delta t}$. The relation $x_n = \alpha \cdot x_{n-1}$ then holds for all discrete samples of the signal where $z_n = 0$, as the signal trace must either be an exponentially decaying curve or zero. The weighted difference function

$$y_n = x_n - \alpha \cdot x_{n-1} \qquad (\text{Eq. 11})$$

is zero everywhere or equal to $z_n$. Therefore $y_n$ reveals the input to the RC stage in discrete sampling intervals, $y_n = z_n$ for all n.

We can interpret the preamp output as generated by a Dirac pulse exciting an IIR filter of the form $I_v := x_n = z_n + \alpha_v \cdot x_{n-1}$ and the deconvolution as FIR filter $F_v := y_n = x_n - \alpha_v \cdot x_{n-1}$. By replacing $x_n$ in $F_v$ it is found that $I_v * F_v = 1$.

The invention also provides a solution in case the signal passes several IIR filters. As the convolutions are commutative in this context, all filters may be put in any location in the signal chain so that all IIR FIR filter pairs will cancel. In filter language, zeroes cancel poles and thereby decrease the filter order:

$$I_1 * I_2 * I_3 * \ldots * F_1 * F_2 * F_3 * \ldots = I_1 * F_1 * I_2 * F_2 * I_3 * F_3 * \ldots = 1 * 1 * 1 * \ldots = 1$$

The first part of the equation is the time convolution formulation of the pole-zero form of the DLTI filter. The meaning of filter zeroes and poles can be interpreted as those filter parameters, that allow the construction of any lengthy filter by consecutive convolutions.

**FIR Filter convolution in the Time Domain**

From filter theory it is known that any given FIR filter can be constructed by convolving consecutively basic filter elements. Convolving two basic FIR filters are calculated as an example.

With the notation

$$FIR\{a_0, a_1, \ldots, a_s\} \Leftrightarrow y_n = \sum_{v=0}^{s} a_v x_{n-v}$$

for the convolution of two filters we need to solve

$$\lambda_1 FIR\{1, a\} * \lambda_2 FIR\{1, b\} = \lambda_3 FIR\{1, x, y\} \qquad \text{(Eq. 12)}.$$

Using $\lambda_1 = \lambda_2 = \lambda_3 = 1$ as scaling factors, $x \neq 0$, $y \neq 0$ Equation 12 can be reduced to the problem

$$\Leftrightarrow (a + b, a \cdot b) = (x, y)$$

$$\Leftrightarrow a_{1,2} = \frac{y}{2} \pm \sqrt{\frac{y^2}{4} - x} \; ; \qquad b_{1,2} = \frac{1}{2} \pm \sqrt{\frac{1}{4} - \frac{x}{y^2}}$$

There are real and complex solutions, depending on the parameters. Here the zeroes of the z-transform notation of FIR filters are found again: they are again filter coefficients of basic FIR filters, the convolution of which constructs any FIR filter with arbitrary coefficients. In the case of inverse filtering, only the real solutions are of interest, the reason being, that the inverse filter of a real IIR filter is a real FIR filter.

**Convolution of IIR Filters**

As any FIR filter can be constructed of basic filter elements, every IIR filter is a convolution of basic IIR filters. The most basic IIR filter has one filter pole as single coefficient. All IIR convolution properties then follow from digital filtering theory. Using the z-transform it can be seen that the expression of a filter as product of poles corresponds to the convolution of basic filters. What makes it useful for the digital signal processing of detector signals is the fact that the impulse response of a single pole IIR filter to a delta function is the basic construction element of detector signals. In other words, such detector signals and the following analogue electronics can be modelled as convolution of IIR filters.

**Applications**

The key applications for deconvolution filtering are the following:

- Deconvolution signal processing of a standard scintillator (NaI(Tl)),
- Ultra fast plastic signal processing / timing,
- Deconvolution of $CdWO_4$ signals for two components,
- Deconvolution of complex scintillator signals with arbitrary many components,
- Pole zero compensation as feed forward calculation,
- Dual pole zero compensation for high resolution spectrometers,
- Pole-zero-free system with LMS (least mean square) adaptive linear filtering,
- Extraction of the electron charge of CdZnTe detectors, and
- Deconvolution of signals of complex scintillator arrangements read out with a single light detector (PMT), e.g. Phoswich detectors.

Some of those key application, the list of which does not limit the claimed applications for the inventive method, will be explained in more detail.

**Impulse Response of real valued Signals with two Filter Poles.**

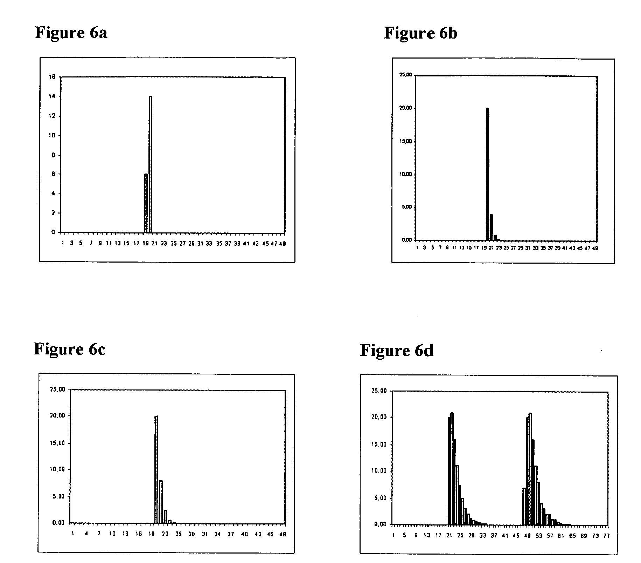

The response function of scintillation detectors is the convolution result of two transfer functions. The incident pulse signal **(Figure 5a)** is first convolved first with the light decay **(Figure 5b)** and then with the decay of the anode signal of the preamplifier **(Figure 5c).** The convolution of preamplifier and light can be seen from **Figure 5d.**
As convolution operations are commutative, the original pulse is evidently recovered by consecutive deconvolutions. All deconvolutions in this case are pure FIR filters. Consecutive filtering can be put into one single filter.

$$F_{light} * G_{preamp} = H_{det\,ector}$$

The light scheme in scintillation crystals undergoes an exponential decay with one or more components. Like preamplifier signals, the light decay has the characteristic of a single pole IIR system. This allows a simulation of the process by a corresponding filter. If the decay scheme has a single component, deconvolution of the initial pulse is the known single zero FIR filter.

**The processing of Digitized NaI(Tl) Signals.**

A sampled (ideal) scintillation detector output is indistinguishable from sampled RC pulse. The same deconvolution technique for light pulses as for RC filters can be applied.
What remains is the filtering of random noise. After deconvolving the original charge, the original pre-transmission noise is also recovered and can thus be filtered. However, amplifiers and digitization contribute to a noise signal which is added after the system transfer function. The deconvolution will typically amplify these post-transmission noise components and require a filter weighting function to match the deconvolution characteristics.
A graphical analysis of a digital system with a NaI(Tl) detector is presented in the following. **Figures 6a to 6d** depict a simulated detector: The initial charge (150 ns charge pulse - Figure 6a), then convolved with the light decay of 250 ns (Figure 6b), furthermore convolved with the anode integrating capacitor of 250 ns RC (Figure 6c) and finally convolved with the preamplifier (750 ns RC integration, Figure 6d). The pulse is depicted in the same plot of Figure 6d together with a true sampled signal. The implementation is optimized for current electronics in handheld equipment, minimizing sampling rates (7Mhz) and filter length (21 taps) suitable for monolithic integrated DSP chips:

$$H(z) = \frac{a_1}{1 - p_1 z^{-1}} \frac{a_2}{1 - p_2 z^{-1}} \frac{a_3}{1 - p_3 z^{-1}};$$

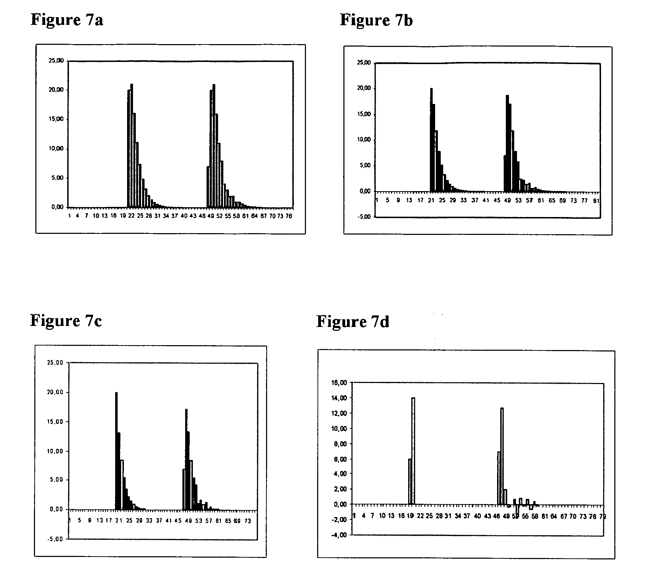

Three cascaded FIR filters consecutively remove the detector transfer functions. **Figure 7a** again shows the simulated and the sampled detector signal. **Figures 7b** and **7c** show the same signals after the first and second deconvolution whereas **Figure 7d** shows the two signals after the final deconvolution

$$H^{-1}(z) = \frac{1}{a_1 a_2 a_3}(1 - p_1 z^{-1})(1 - p_2 z^{-1})(1 - p_3 z^{-1}).$$

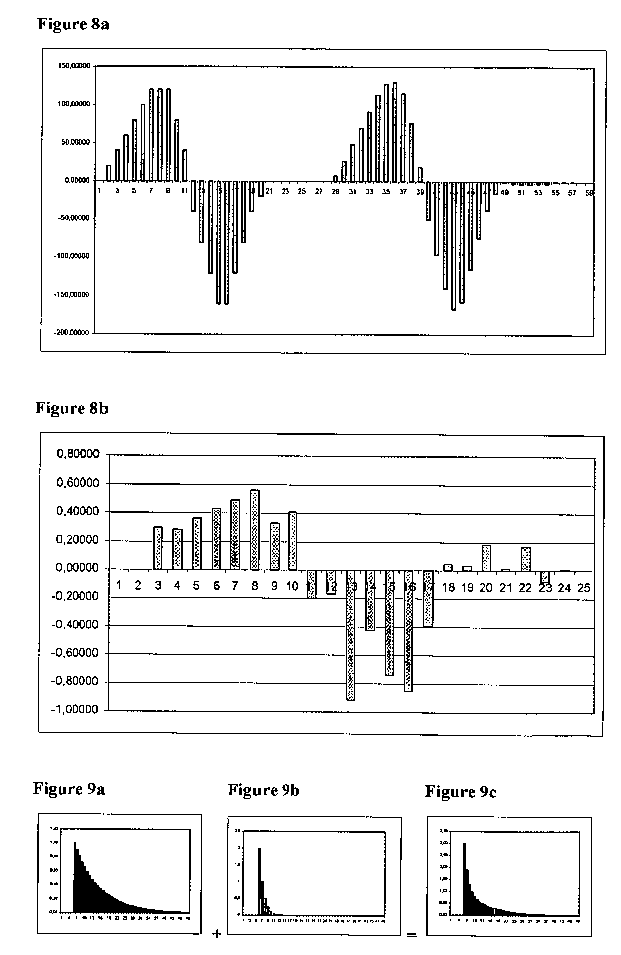

The resulting deconvolved charge signal is noise filtered, whereas the noise filtering is subject to another invention. All of the deconvolution and noise filtering steps define just one optimal FIR filter allowing 150 kcps throughput at 400 kcps input rate, as can be seen from **Figures 8a** and **8b.** Figure 8a shows the bipolar shaping of the signal after deconvolution. In Figure 8b, the impulse response of the combined FIR filter can be seen.

**Deconvolution of two Components in CdWO$_4$ Signals**

*CdWO$_4$* has two light components with decay constants of $p_1 = 20\mu s$ and $p_2 = 5\mu s$ with magnitudes $a_1$, $a_2$ . The light impulse response therefore is the superposition of two superimposed exponential functions. **Figure 9c** shows the superposition *H(z)* whereas **Figures 9a** and **9b** do show the two single light components with the two decay times $p_1$ (Figure 9a) and $p_2$ (Figure 9b).
The model is that of a filter with two parallel poles:

$$H(z) = \frac{a_1}{1 - p_1 z^{-1}} + \frac{a_2}{1 - p_2 z^{-1}}$$

Inversion yields:

$$H^{-1}(z) = \frac{1}{a_1 + a_2} \cdot \frac{1 - (p_1 + p_2)z^{-1} + p_1 p_2 z^{-2}}{1 - \dfrac{p_1 a_2 + p_2 a_1}{a_1 + a_2} z^{-1}}$$

Thus the deconvolution is a combination of an FIR filter and an IIR filter, the coefficients of which can be directly taken from *H(z)*, $a_1 + a_2 = 1$:

$$y_n = x_n - (p_1 + p_2)x_{n-1} + p_1 p_2 x_{n-2} + (p_1(1-a) + p_2)y_n$$

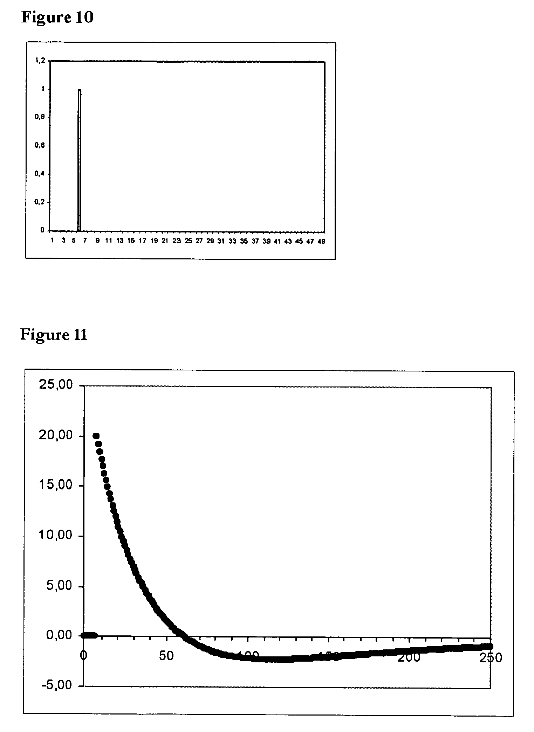

The signal, resulting from deconvolution, is the physical radiation signal, shown in **Figure 10.**

**Pole Zero Compensation Issues and Deconvolution**

A very important technical issue for spectrometry systems is the pole zero compensation in the signal chain. All analogue designs resolve the pole zero compensation by adding a DC fraction of the input to the convolved, differentiated output signal. According to the digital signal processing of this invention, using deconvolution techniques, it is possible to compensate for a prior input pole without referring to the DC signal. It is even possible to derive multiple consecutive filter poles directly from any single input signal. This overcomes all feedback based automatic pole zero cancellation methods and allows simplified, ac-coupled stable input circuits.

**Single Pole-Zero Compensation Calculation**

The digital filter pole zero compensation is based upon successful signal deconvolution: After selecting suitable points on the input curve, we resolve the equation for the pole parameters in the time-domain convolution equation.
It is possible to deconvolve a single pole signal by applying the FIR filter $y(n) = x(n) - \alpha x(x{-}1)$; therefore it is a

necessary condition that $\alpha = \dfrac{x(n)}{x(n-1)}$ everywhere, except at the location(s) $n_0$ where the charge is being injected or, in filter terminology, where the driving signal is nonzero. Practically it is searched for undisturbed points on the decaying back of the exponential input curve and two consecutive sample values are divided. Of course, for numerical stability it is advantageous to rather calculate $\alpha^r = \dfrac{x(n)}{x(n-r)}$, but this is usual numerical practise as one tries to maximize the difference between nominator and denominator to achieve a higher accuracy of the quotient in computation.

**Double Pole-Zero Compensation Calculation**

The reasoning for the next step is a little more elaborate. In the beginning the filter pole chain of a resistive feedback (RFB) preamplifier detector system is analyzed. For noise reduction reasons, RFB preamplifiers have a large first pole in the range of milliseconds. This pole is scaled down in the preamplifier by a pole-zero compensated differentiator to typically 25-100 $\mu$s. In shaping amplifiers or digital multi channel analyzers there is another pole-zero compensated differentiation ranging from a few hundred nanoseconds to microseconds. In the end, there is a signal having a true exponential decay, that is one single short pole, which can be processed by digital or analogue means. For example, MWD can be directly applied.

When pole zero compensation is omitted in the analogue circuit, a true accoupling and no pole zero circuitry are important electronic design advantages. In addition, the input dynamic range is optimized.

In the present example, the signal is convoluted by a second order filter. From filter theory it is clear that it should be possible to deconvolve the system transfer function, when knowing the filter poles. As a result of this work, it is possible to derive both poles from the signal.

Two linearly independent equations for the two filter pole variables using the inverse FIR filters convolution equations are constructed. We assume two cascaded deconvolving FIR filters. For the deconvolved output achieved after the last deconvolution we can express the constant in terms of the input to the last deconvolution $\alpha^r = \dfrac{y_v}{y_{v-r}}$ and as well for different points $v \neq \mu$, $\alpha^r = \dfrac{y_\mu}{y_{\mu-r}}$.

This leads to an equation for the input to the second filter $y_v y_{\mu-r} = y_\mu y_{v-r}$. On the other hand, $y_v = x_v - \beta' x_{v-r}$ is true after the first deconvolution, which leads to an equation for $\beta^r$ on the input data points:

$$(x_v - \beta^r x_{v-r})(x_\mu - \beta^r x_{\mu-r}) = (x_\mu - \beta^r x_{\mu-r})(x_v - \beta^r x_{v-r})$$

Points $x_v$, $x_{v-r}$, $x_{v-2r}$, $x_{v-3r}$ are arbitrarily selected with suitable distances by $\mu := v - 2r$. For writing convenience, it is defined:

$$a := x_{v-r} x_{v-r} - x_v x_{v-2r};  \qquad  b := x_v x_{v-3r} - x_{v-r} x_{v-2r};$$

$$c := x_{v-2r} x_{v-2r} - x_{v-r} x_{v-3r};$$

and

$$\gamma := (-b + \frac{\sqrt{b^2 - 4ac}}{2a});$$

Then, the deconvolution constants are found as

$$\alpha = (1-\gamma)^{r^{-1}}$$

$$\beta = \left( \frac{\gamma x_{n-2r} - x_{n-3r}}{\gamma x_{v-r} - x_{v-2r}} \right)^{r^{-1}}$$

**The Construction of general inverse DLTI Filters for Detector Pulses**

In the foregoing paragraphs it proved to be very practical treating a nuclear detector as an invertible DLTI system. The MWD deconvolution algorithm could be interpreted as a special case of an inverse FIR filter. Moreover a FIR filter for the fast processing of scintillator signals and a sophisticated pole zero cancellation have been disclosed. In the following general means to construct inverse filters with the ultimate goal of a fully adaptive system are described.

**Double Pole Zero Cancellation revisited**

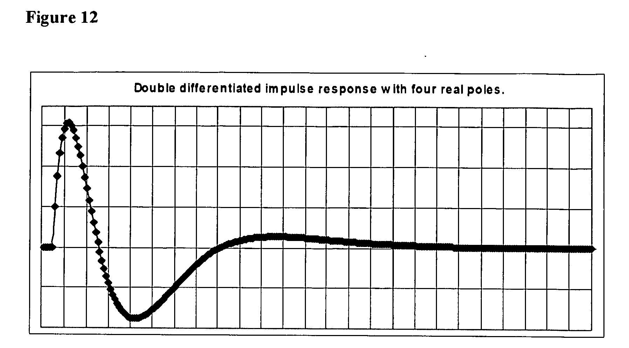

**Figure 11** shows an impulse response with two real poles. For the previously described pole zero compensation calculation, the two "zeroes" $\alpha, \beta$ that cancel the prior poles had been calculated by straight forward algebraic equations using finite sample data points. These equations delivering the filter constants had been derived using the condition that two consecutive time convolutions of inverse single zero FIR filters must be zero everywhere except at locations where the forcing impulse is finite.

Let $P_1, P_2$ denote two single pole IIR filers constructing the system. It is evident that the corresponding inverse single zero FIR filters $F_1, F_2$ with appropriate constants will cancel $P_1, P_2$. Formally a delta pulse will be revealed (.. $0,0,1,0,0,0,0,0,...) \otimes P_1 \otimes P_2 \otimes F_1 \otimes F_2 = (..0,0,1,0,0,0,0,0,...)$

As the sample data $(..0,0,1,0,0,0,0,0,...) \otimes P_1 \otimes P_2 = (...0,0,x_1,x_2,x_3,x_4,.......)$ provides sufficient data, infinitely many independent equations for the filter constants of $F_1, F_2$ can be found. With the knowledge of the forcing impulse it is then feasible to resolve an equation system on the "tail" of the system output.

For numerical accuracy purposes it is prudent using points on the steep descend. The explicit pole zero cancellation calculation as derived in the previous paragraphs yields the explicit values for the system poles.

**Multiple Pole Zero Cancellation: FIR Inverse of an All Pole System**

The double pole zero cancellation calculation method can be extended iteratively for more than two poles. However, calculating the direct deconvolution coefficients for signals with multiple poles becomes numerically problematic. The order of the polynomial equations equals to the number of poles. Also, the number of solutions will increase with the polynomial degree and the selection of suitable constants needs additional consideration and computation. **Figure 12** shows double differentiated impulse response with four real poles.

For the construction of a general IIR inverse FIR filter, however it is not necessary to know all poles explicitly. As the exact values for the poles are hidden in IIR filter coefficients, the zeroes of its inverse FIR filter do not need to be explicitly calculated for filter construction.

The inverse FIR filter coefficients are rather defined by a simple linear equation system.

With the DLTI detector model $H(c,d): x_n \mapsto y_n = \sum_{v=0}^{N} c_v x_{n-v} + \sum_{v=1}^{M} d_v y_{n-v}$ being valid for every sample on the impulse response and because the convolution with the inverse filter must yield the original, equations for all filter constants can be derived. There are several established methods to find such filter constants $c_v, d_v$. As mentioned before, the interesting constants to compute are the $d_v$'s of the IIR part. A direct "Padé" and the "Wiener" least squares approach for filter parameter estimation are introduced.

Any DLTI filter can be understood as the convolution of its FIR and IIR parts. Excited by a Dirac, the FIR part may serve as the forced response and the IIR part as the natural response of the (detector) system. The impulse response then is a sequence $y_0, y_1, y_2, ..., y_N, y_{N+1}, y_{N+2}, ...$ . It has the useful property that there exists a crucial point at the sample location $N$. From hereon the (detector system-) output signal $y_N, y_{N+1}, y_{N+2}, ...$ is "unaware" of - or has "forgotten" - its excitation, the FIR part. Thereby, for a Dirac excited system, the natural response part to calculate the inverse FIR coefficients can be selected in a straight forward manner.

The system $H$(c, d) to be inverted is the convolution of a FIR-$F_H$(c) and an IIR-part $I_H$ (d)

$$H(\mathrm{c,d}) = F_H(\mathrm{c}) \otimes I_H(\mathrm{d}).$$

Applying an inverse FIR filter $I_H^{-1}(\mathrm{d})$ which cancels all system poles will leave a finite impulse answer

$$H(\mathrm{c,d}) \otimes I_H^{-1} = F_H(\mathrm{c}) \otimes I_H(\mathrm{d}) \otimes I_H^{-1}(\mathrm{d}) = F_H(\mathrm{c}).$$

If the system $H$(c,d) is an all pole system, then the residual $F_H$(c) is already the unit transfer function and the deconvolution is complete. Otherwise an additional inverse IIR filter $F^{-1}{}_H$ (c) must be applied for full signal deconvolution.

**Inverse FIR Filter Construction using the Padé Approximation**

Assume the (detector-) system $H$(c,d) = $F_H$ (c) $\otimes$ $I_H$ (d) has $n$ poles. Let $y_{v-n-1}, y_{v-n}, ... y_{v+n}$ be sample values on the "back" of the input pulse and $(v-n) > N$, the number of zeroes of $F_H$(c). The constants $d_1, .., d_n$ are the desired poles and respectively the corresponding inverse FIR filter constants $1, d_1, .., d_n$ if

$$y_v = -\sum_{\mu=1}^{n} d_\mu y_{v-\mu} + fir(x_v)$$

When the input signal is zero after a finite excitation, i.e. all $x_v = 0$ and thereby the FIR part $fir(x_v) = 0$, an equation in matrix form

$$\begin{bmatrix} y_{v-1} & y_{v-2} & \cdots & y_{v-n} \\ y_v & y_{v-1} & \cdots & y_{v-n-1} \\ \cdots & \cdots & \cdots & \cdots \\ y_{v+n-1} & y_{v+n} & \cdots & y_{v-1} \end{bmatrix} \begin{bmatrix} d_1 \\ d_2 \\ \cdots \\ d_n \end{bmatrix} = - \begin{bmatrix} y_v \\ y_{v+1} \\ \cdots \\ y_{v+n} \end{bmatrix}$$

has to be solved. This condition forms a Toeplitz matrix and hence with full rank it can be efficiently inverted. An FIR filter with coefficients $1, d_1, d_2, ..., d_n$ is a straight forward solution for cancelling n arbitrary poles. Since all those sampled data points with indices $> \upsilon + n$ are not being used, the numerical accuracy will improve by averaging over more samples

$$
\begin{bmatrix}
\sum\limits_{\mu=v}^{v+m} y_{\mu-1} & \sum\limits_{\mu=v}^{v+m} y_{\mu-2} & \cdots & \sum\limits_{\mu=v}^{v+m} y_{\mu-n} \\
\sum\limits_{\mu=v}^{v+m} y_{\mu} & \sum\limits_{\mu=v}^{v+m} y_{\mu-1} & \cdots & \sum\limits_{\mu=v}^{v+m} y_{\mu-n-1} \\
\cdots & \cdots & \cdots & \cdots \\
\sum\limits_{\mu=v}^{v+m} y_{\mu+n-1} & \sum\limits_{\mu=v}^{v+m} y_{\mu-n} & \cdots & \sum\limits_{\mu=v}^{v+m} y_{\mu-1}
\end{bmatrix}
\begin{bmatrix} d_1 \\ d_2 \\ \cdots \\ d_n \end{bmatrix}
= -
\begin{bmatrix}
\sum\limits_{\mu=v}^{v+m} y_{\mu} \\
\sum\limits_{\mu=v}^{v+m} y_{\mu+1} \\
\cdots \\
\sum\limits_{\mu=v}^{v+m} y_{\mu+n}
\end{bmatrix}
$$

The number of poles (matrix rank) still must be given explicitly. Consequently the next step is to calculate the rank of the matrix to estimate the number of poles.

However, before coming back to this problem of model estimation, a better (in the least square sense) approach is introduced, making use of significantly more sampled data points by finding the optimum least square inverse FIR filter, a *Wiener* filter.

**Inverse optimal FIR Wiener Filter for multiple Pole Zero Cancellation**

Let $e_n = 0 - \sum\limits_{v=0}^{N} c_v y_{n-v}$ define the PZ canceling FIR filter error.

The error sum $\varepsilon = \sum\limits_{\mu=0}^{\infty} e_\mu^2 = \sum\limits_{\mu=0}^{\infty} \left[ \sum\limits_{v=0}^{N} c_v y_{\mu-v} \right]^2$ shall be minimal for the optimal filter.

For practical reasons, the summing is restricted to be finite, $K \gg N$. Let $\xi_n := \sum\limits_{v=0}^{K} y_v y_{v-n}$ define the autocorrelation on the sequence, then

$$
\begin{bmatrix}
\xi_n & \xi_{n+1} & \xi_{n+2} & \cdots & \xi_{n+N} \\
\xi_{n+1} & \xi_n & \xi_{n+1} & \cdots & \xi_{n+N-1} \\
\cdot & \cdot & \cdot & \cdots & \cdot \\
\cdot & \cdot & \cdot & \cdot & \cdot \\
\xi_{n+N} & \xi_{n+N-1} & \cdots & \cdots & \xi_n
\end{bmatrix}
\begin{bmatrix} c_0 \\ c_1 \\ \cdot \\ \cdot \\ c_M \end{bmatrix}
=
\begin{bmatrix} y_n \\ 0 \\ 0 \\ 0 \\ 0 \end{bmatrix}
$$

is a symmetric Toeplitz matrix, $Toep\{\xi_n, \xi_{n+1}, \ldots \xi_{n+N}\}$ which is efficiently resolved by the Levinson-Durbin algorithm. Thus the inverse FIR filter $I_H^{-1}$ with coefficients $c_0, c_1, c_2, c_3, \ldots c_M$ has been found.

**Claims**

1.  Measuring device for obtaining energy spectra of one or more types of radiation, namely of a X-ray, gamma ray, or nuclear particle radiation, comprising a detector system, an analog-to-digital converter (ADC), and a digital filter, **characterized in that** the digital filter is inverse to the filter describing at least parts of the transfer network of the detector system.

2.  Measuring device for obtaining energy spectra of one or more types of radiation, namely of a X-ray, gamma ray, or nuclear particle radiation, comprising a detector system, an analog-to-digital converter (ADC), and a digital filter, **characterized in that** the digital filter provides for a single pole zero compensation.

**3.** Measuring device for obtaining energy spectra of one or more types of radiation, namely of a X-ray, gamma ray, or nuclear particle radiation, comprising a detector system, an analog-to-digital converter (ADC), and a digital filter, **characterized in that** the digital filter provides for a dual pole zero compensation.

**4.** Measuring device according to one of the previous claims, **characterized in that** the inverse digital filters are implemented in specialized integrated circuits, e.g. digital signal processors (DSPs), ASICs, or PLDs.

**5.** Measuring device according to one of the previous claims 1 to 3, **characterized in that** the inverse digital filters are realized within a programmable device of a common data processing unit.

**6.** Measuring device according to one of the previous claims, **characterized in that** the analog-to-digital converter is integrated in the detector unit together with the detector system.

**7.** Measuring device according to one of the previous claims, **characterized in that** digital signals $x_n$ are transferred by means of wired or wireless data transmission lines to the inverse filter for further processing.

**8.** Measuring device according to claim 7, **characterized in that** the wired data transmission line is selected from the group, consisting of USB, parallel or serial interfaces, Ethernet, or fiber-optic system.

**9.** Measuring device according to claim 7, **characterized in that** the wireless data transmission line is selected from the group, consisting of wireless LAN, ISM frequency range or optical (e.g. infrared) transmission.

**10.** Measuring device according to one of the previous claims, **characterized in that** the analog-to-digital converter is realized on a plug-in board for computers.

**11.** Measuring device according to one of the previous claims, **characterized in that** the inverse digital filter is realized as a programmable data processing unit.

**12.** Method for obtaining energy spectra of one or more types of radiation, namely of a X-ray, gamma ray, or nuclear particle radiation, comprising the steps of

(1) acquisition of an analog detector signal,
(2) analog-to-digital conversion of the detector signal,
(3) digital filtering of the detector signal, while the digital filter is inverse to the filter describing at least parts of the transfer network of the detector system,
(4) output of the filtered detector signal.

**13.** Method for obtaining energy spectra of one or more types of radiation, namely of a X-ray, gamma ray, or nuclear particle radiation, comprising the steps of

(1) acquisition of an analog detector signal,
(2) analog-to-digital conversion of the detector signal,
(3) determination of a single pole $\alpha$ from $\alpha^r$ by division of two consecutive data points $x_n, x_{n-r}$ at a distance $r$ on the exponential trailing edge of the input signal, where $r \in R\{0\}$,
(4) digital filtering of the detector signal, while the digital filter compensates for the single predetermined pole,
(5) output of the filtered detector signal.

**14.** Method for obtaining energy spectra of one or more types of radiation, namely of a X-ray, gamma ray, or nuclear particle radiation, comprising the steps of

(1) acquisition of an analog detector signal,
(2) analog-to-digital conversion of the detector signal,
(3) determination of two poles $\alpha, \beta$ from $\alpha^r, \beta^r$ by choosing four equidistant consecutive data points $x_v, x_{v-r}, x_{v-2r},$

$x_{v-3r}$ on the exponential trailing edge of the input signal, from $\alpha = (1 - \gamma)^{r^{-1}}$, $\beta = \left( \dfrac{\gamma x_{n-2r} - x_{n-3r}}{\gamma x_{v-r} - x_{v-2r}} \right)^{r^{-1}}$, where

$$a := x_{v-r} x_{v-r} - x_v x_{v-2r}, \qquad\qquad b := x_v x_{v-3r} - x_{v-r} x_{v-2r},$$

$$c := x_{v-2r} x_{v-2r} - x_{v-r} x_{v-3r}, \qquad \gamma := \left( -b + \frac{\sqrt{b^2 - 4ac}}{2a} \right),$$

and $r \in R\{0\}$.

(4) digital filtering of the detector signal, while the digital filter compensates for the two predetermined poles,

(5) output of the filtered detector signal.

**15.** Software for obtaining energy spectra of one or more types of radiation, namely of a X-ray, gamma ray, or nuclear particle radiation, where the software is stored on a data carrier, and, if applied, is capable of digitally filtering of previously obtained detector signals, which have been digitized by means of an analog-to-digital converter, where the digital filter is inverse to the filter describing at least parts of the transfer network of the detector system, and where the filtered detector signal is provided for further evaluation.

**16.** Software for obtaining energy spectra of one or more types of radiation, namely of a X-ray, gamma ray, or nuclear particle radiation, where the software is stored on a data carrier, and, if applied, is capable of digitally filtering of previously obtained detector signals, which have been digitized by means of an analog-to-digital converter, where a single pole $\alpha$, which is determined from $\alpha^r$ by division of two consecutive data points $x_n, x_{n-r}$ at a distance $r$ on the exponential trailing edge of the input signal, where $r \in R\{0\}$, is set for filtering purposes, and where the filter compensates for the previously set pole and where the filtered detector signal is provided for further evaluation.

**17.** Software for obtaining energy spectra of one or more types of radiation, namely of a X-ray, gamma ray, or nuclear particle radiation, where the software is stored on a data carrier, and, if applied, is capable of digitally filtering of previously obtained detector signals, which have been digitized by means of an analog-to-digital converter, where two poles $\alpha$, $\beta$, which are determined from $\alpha^r$, $\beta^r$ by choosing four equidistant consecutive data points $x_v$, $x_{v-r}$, $x_{v-2r}$, $x_{v-3r}$, $x_n$, $x_{n-r}$ at a distance $r$ on the exponential trailing edge of the input signal, with

$$\alpha = (1-\gamma)^{r^{-1}}, \beta = \left( \frac{\gamma x_{n-2r} - x_{n-3r}}{\gamma x_{v-r} - x_{v-2r}} \right)^{r^{-1}},$$

where

$$a := x_{v-r} x_{v-r} - x_v x_{v-2r}, \qquad\qquad b := x_v x_{v-3r} - x_{v-r} x_{v-2r},$$

$$c := x_{v-2r} x_{v-2r} - x_{v-r} x_{v-3r}, \qquad \gamma := \left( -b + \frac{\sqrt{b^2 - 4ac}}{2a} \right),$$

and $r \in R\{0\}$,

are set for filtering purposes, and where the filter compensates for the previously set poles and where the filtered detector signal is provided for further evaluation.

**Figure 1**

**Figure 2**

**Figure 3**

| $z_n$ Charge Input | → | Detector Transfer Function | → | $x_n$ ADC Input | → | Inverse Filter | → | $y_n$ Filter Output |

**Figure 4a**

**Figure 4b**

**Figure 4c**

**Figure 5a**

**Figure 5b**

**Figure 5c**

**Figure 5d**

**Figure 6a**

**Figure 6b**

**Figure 6c**

**Figure 6d**

**Figure 7a**

**Figure 7b**

**Figure 7c**

**Figure 7d**

**Figure 8a**

**Figure 8b**

**Figure 9a**          **Figure 9b**          **Figure 9c**

+   =

Figure 10

Figure 11

Figure 12

Double differentiated impulse response with four real poles.

**European Patent Office**

**EUROPEAN SEARCH REPORT**

Application Number

EP 05 00 9566

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 276 615 A (TOURNIER EDMOND ET AL) 4 January 1994 (1994-01-04) | 1,4,6, 12,15 | G01T1/17 G01T1/36 |
| A | * column 4, line 1 - line 40 * | 5-11 | |
| X | EP 1 094 334 A (CANBERRA INDUSTRIES, INC) 25 April 2001 (2001-04-25) | 2-4,13, 14,16,17 | |
| A | * paragraph [0051] - paragraph [0058] * | 1,5-12 | |
| X | US 5 872 363 A (BINGHAM ET AL) 16 February 1999 (1999-02-16) | 2-4,11, 13,14, 16,17 | |
| A | * abstract * | 5-10 | |
| D,X | US 5 307 299 A (STEIN ET AL) 26 April 1994 (1994-04-26) | 1,4,6, 12,15 | |
| A | | 2,3,5, 7-11,13, 14,16,17 | |

TECHNICAL FIELDS SEARCHED (Int.Cl.7)

G01T

The present search report has been drawn up for all claims

| Place of search | Date of completion of the search | Examiner |
|---|---|---|
| Munich | 14 September 2005 | Rabenstein, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 00 9566

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2005

| Patent document cited in search report | | Publication date | Patent family member(s) | | Publication date |
|---|---|---|---|---|---|
| US 5276615 | A | 04-01-1994 | DE | 69105866 D1 | 26-01-1995 |
| | | | DE | 69105866 T2 | 06-07-1995 |
| | | | EP | 0470909 A1 | 12-02-1992 |
| | | | FR | 2665770 A1 | 14-02-1992 |
| | | | IL | 99072 A | 31-03-1996 |
| | | | JP | 5134043 A | 28-05-1993 |
| EP 1094334 | A | 25-04-2001 | NONE | | |
| US 5872363 | A | 16-02-1999 | NONE | | |
| US 5307299 | A | 26-04-1994 | EP | 0550830 A1 | 14-07-1993 |
| | | | JP | 5256951 A | 08-10-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5307299 A